(19) Europäisches Patentamt
European Patent Office
Office européen des brevets

(11) EP 2 963 563 A1

(12) EUROPEAN PATENT APPLICATION

(43) Date of publication:
06.01.2016 Bulletin 2016/01

(51) Int Cl.:
*G06F 17/30* (2006.01)

(21) Application number: 14175097.6

(22) Date of filing: 30.06.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Fujitsu Limited
Kawasaki-shi, Kanagawa 211-8588 (JP)

(72) Inventors:
• Hu, Bo
Winchester, Hampshire SO22 5EG (GB)
• Menday, Roger
Guildford, Surrey GU1 2HH (GB)

(74) Representative: Hutchison, James
Haseltine Lake LLP
300 High Holborn
London, Greater London WC1V 7JH (GB)

(54) **Computing apparatus and method for managing a graph database**

(57) Embodiments include a computing apparatus configured to automate the integration of non-conceptual data items into a data graph, the data graph being composed of graph elements including graph nodes and graph edges, the computing apparatus comprising: a data storage system configured to store, as a graph node of the data graph for each of a plurality of non-conceptual data items, a behaviour handler defining a procedure for using the non-conceptual data item to update the data graph in response to an occurrence of a specified trigger event, the graph node representing the behaviour handler being stored in association with the non-conceptual data item; an execution module configured to execute the procedure defined by a behaviour handler from among the behaviour handlers in response to an occurrence of the specified trigger event for the behaviour handler; a modification identification module configured to identify graph elements modified as a consequence of the execution of the procedure, and to record the identified graph elements as members of a set of modifications attributed to the behaviour handler defining the executed procedure; an inference module configured to infer relationships between behaviour handlers by, for each pair of behaviour handlers defining executed procedures, analysing the sets of modifications attributed to the pair of behaviour handlers in order to identify relationships between the sets of modifications, and adding the identified relationships to the data graph as edges between the graph nodes representing the respective behaviour handlers.

FIGURE 2

## Description

The present invention lies in the field of data storage, and in particular relates to a mechanism for storing data in a semantically meaningful way.

Relational databases store data in rows and columns. The rows and columns compose tables that need to be defined before storing the data. The definition of the tables and the relationship between data contained on these tables is called a schema. A relational database uses a fixed schema. Graph databases represent a significant extension over relational databases by storing data in the form of nodes and arcs, where a node represents an entity or instance, and an arc represents a relationship of some type between any two nodes. In an undirected graph, an arc from node A to node B is considered to be the same as an arc from node B to node A. In a directed graph, the two directions are treated as distinct arcs.

Graph databases are used in a wide variety of different applications that can be generally categorized into two major types. The first type consists of complex knowledge-based systems that have large collections of class descriptions (referred to as "knowledge-based applications"), such as intelligent decision support and self learning. The second type includes applications that involve performing graph searches over transactional data (referred to as "transactional data applications"), such as social data and business intelligence. Many applications may represent both types. However, most applications can be characterized primarily as either knowledge-based or transactional data applications. Graph databases can be used to maintain large "semantic networks" that can store large amounts of structured and unstructured data in various fields. A semantic network is used as a form of knowledge representation and is a directed graph consisting of nodes that represent concepts, and arcs that represent semantic relationships between the concepts.

Ontological approaches to knowledge representation and reasoning and knowledge management may be required to effectively combine conceptual knowledge, which is visible to any ontology inference engine, and non-conceptual (or the so-called "concrete") knowledge (numeric, literal or other types of data), which is not visible or not transparent to existing ontology inference engines. The latter includes string, numeric data and multimedia data.

Currently, design time approaches exist in which a knowledge engineer must manually add semantic information to non-conceptual data at design time. Incorporating non-conceptual into the semantic network at design time results in significant overhead to the knowledge engineer and presents the potential for modelling discrepancies, partially due to human errors and human idiosyncrasies. The quality of overall inference, therefore, cannot be guaranteed. Design time approach also requires the knowledge engineers to have good knowledge of both conceptual and non-conceptual data which might not be easy to acquire and might not be easy to integrate.

Using dedicated tools for managing and handling non-conceptual data separated from conceptual ones removes the extra requirements imposed by the design-time approach. However, such dedicated tools need to be wrapped so as to make the reasoning results visible to those engines designed for the conceptual data. Errors and/or inconsistency might be introduced at the "wrapping" stage. Ontological inference is normally based on open-world assumptions, which is not necessarily fully compatible with tools for handling non-conceptual knowledge, which are normally based on closed world assumptions. Furthermore, the semantics associated with non-conceptual data are not necessarily clearly and uniformly defined and thus are not easily understood by human knowledge engineers (e.g. for quality assurance purposes).

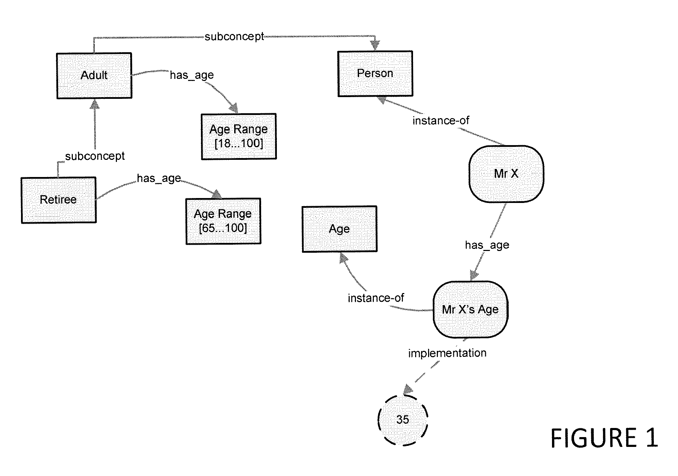

The integral inference of semantic information describing both conceptual and non-conceptual data is not straightforward, due to the invisibility of each one in the management system of the other. In existing technologies, non-conceptual data is made available through arbitrarily created conceptual entities representing a subset of the former. For instance, the numeric value of people's age can be introduced as either a point value or a range value associated with an arbitrary "age" object. This object may then be connected to the person instance as illustrated in Figure 1. Figure 1 illustrates examples of exploiting concrete knowledge. On the right hand side, the point value of Mr X's age (35) is an implementation of the concept "Mr X's Age", and is not visible to ontological inference engines and ontology management systems and thus is not considered in ontology reasoning. A specialised functional tool, whose outcomes are reflected through arbitrary modelling in the conceptual part, is required in order to attribute semantic information to the point value of Mr X's age.

Embodiments of the present invention include a computing apparatus configured to automate the integration of non-conceptual data items into a data graph, the data graph being composed of graph elements including graph nodes and graph edges, the computing apparatus comprising: a data storage system configured to store, as a graph node of the data graph for each of a plurality of non-conceptual data items, a behaviour handler defining a procedure for using the non-conceptual data item to update the data graph in response to an occurrence of a specified trigger event, the graph node representing the behaviour handler being stored in association with the non-conceptual data item; an execution module configured to execute the procedure defined by a behaviour handler from among the behaviour handlers in response to an occurrence of the specified trigger event for the behaviour handler; a modification identification module configured to identify graph elements modified as a consequence of the execution of the procedure, and to record the identified graph elements as members of a set of modifications attributed to the behaviour handler defining the executed procedure; an inference module configured to infer relationships between behaviour handlers by, for each pair of behaviour handlers defining executed procedures, analysing the sets of modifications attributed to the pair of behaviour handlers in order to identify relationships between the sets of modifications, and adding the identified relationships to the data graph as edges between the graph nodes representing the respective behaviour handlers.

Advantageously, the procedure followed by embodiments enables the semantics of both conceptual knowledge, being knowledge represented in the data graph, and non-conceptual knowledge, being knowledge represented by non-conceptual data items linked to surrogate entities in the data graph, to be unified and described in a single ontology.

The linking (storing in association) of non-conceptual data items to behaviour handler graph nodes in the data graph provides a mechanism for attributing semantic information to the non-conceptual data items, and the analysis of the activity of the behaviour handlers (the sets of modifications attributed to the behaviour handlers) provides a mechanism for determining what that semantic information should be. Thereby, the inference effort involved in handling heterogeneous data containing both conceptual and non-conceptual entities is simplified and reduced.

In providing a tool for the integration of non-conceptual data into a conceptual data graph, embodiments enrich the expressiveness of knowledge representation and reasoning formalisms enabled by the data graph. Furthermore, the procedure according to invention embodiments is systematic and therefore reduces modelling variations which can result from a lack of automated methodology in modelling non-conceptual data.

The procedure is automated in that it proceeds in the absence of user input at runtime.

Non-conceptual data items may also be referred to as concrete data items and may be defined as data from an XML schema or from an XML schema type system. Non-conceptual data items are data that cannot be modelled directly with the native constructs of an ontology modelling language. Non-conceptual data items may be native data types from imperative programming languages. For example, in Java the Integer, String, Double, etc. Non-conceptual data items may be defined as data items which manifest or implement the resources modelled in the data graph in machine readable or executable form.

The data graph, on the other hand, is a representation of a semantic data model in which resources or entities of the data model are stored as graph nodes (which can also be referred to as vertices), and relationships among those resources or entities are stored as edges (which can also be referred to as arcs or interconnections). In this document, graph entities is used as a collective term for graph nodes and graph edges. The encoding of graph entities (for example, as RDF triples) may be such that graph nodes and graph edges cannot be resolved into separate data items and a graph node is a sum of all of the graph edges relating to the same resource. The data graph models conceptual data, that is, data that can be modelled with a non-extended ontology modelling language such as OWL or RDF or RDFS. Such modelling languages focus on capturing the entities in the domain being modelled and capturing the relationships among the entities. Reasoning based on such languages may be facilitated through a subset of first order predicate logic. For instance, OWL is supported by description logic satisfaction problem.

The data graph is effectively a manifestation of stored data, and is a means for representing the stored data, both to a user and to event handlers or other processes internal to the data storage system. It may be that the data graph is encoded as triples, for example, RDF triples, and that a resource is defined by the triples in which it is named as the subject. Alternatively or additionally, it may be that data is stored in a key value store, with triples serving as keys indexing storage locations at which additional data (for example, metadata) defining a resource is stored.

Triples provide for encoding of graph data by characterising the graph data as a plurality of subject-predicate-object expressions. In that context, the subject and object are graph nodes of the graph data, and the predicate is a representation of a relationship between the subject and the object. The predicate asserts something about the subject by providing a specified type of link to the object. For example, the subject may denote a Web resource (for example, via a URI), the predicate denote a particular trait, characteristic, or aspect of the resource, and the object denote an instance of that trait, characteristic, or aspect. In other words, a collection of triple statements intrinsically represents directional graph data. The RDF standard provides formalised structure for such triples.

Graph edges are labelled relationships between graph nodes. The edges may be directional. An edge from a first graph node to a second graph node denotes or defines a logical connection between the two graph nodes, with the label assigned to the edge defining the form of that logical relationship. For example, the first graph node may be considered to be a subject and the second graph node an object. The label of the edge identifies a property of the subject, and the value of the object defines a range or value of that property attributable to the subject. Predicate is a term that may be used to define the label assigned to the edge.

A behaviour handler, which may also be referred to an event handler, provides a mechanism for an occurrence of a particular type of event, for example, a write access changing a data value included in a graph element, to cause processing to be performed beyond that involved in the occurrence itself. The inclusion of behaviour handlers in the data graph provides the functionality for a single occurrence of an event to cause a series of consequential processing events, the behaviour handlers defining rules and/or instructions for determining what those consequential processing events are and for executing them.

A behaviour handler may be a process or a set of instructions which, when executed by a processor, cause a process to be performed. A behaviour handler being executed may include read or write accesses being made to the data graph and modifications being made. The processing may include modifying stored data, and/or considering whether or not to modify stored data based upon factors which may include characteristics of the processing event giving rise to the execution. Behaviour handlers may be stored explicitly in the data graph or may be represented by a link to a storage location at which the processing rules and/or instructions implementing the behaviour handler are stored.

The specified trigger event in response to an occurrence of which the behaviour handler is executed may be one of a set of trigger events registered to the behaviour handler so that the behaviour handler is configured to execute a procedure in response to an occurrence of any of the set of trigger events registered thereto. The one or more trigger events in response to an occurrence of which the behaviour handler is executed may be defined in terms of an event type (graph entity delete/read/write/update) and/or an event location (location being a specified entity or group of graph entities). The behaviour handler may therefore be configured to observe the data graph in order to recognise when a specified event has occurred. Alternatively, the trigger event may be a system event such as a refresh or update, or some other form of data graph-wide processing event or update. The specified trigger event may be an event which makes a read or write access to the non-conceptual data item with which the behaviour handler is associated.

The association between the behaviour handler and non-conceptual data item used by the behaviour handler to update the data graph may be stored in the form of an explicit link having the form of a graph edge or node. However, the non-conceptual data item cannot be interpreted by an inference system configured to handle conceptual data. That is to say, the non-conceptual data items are isolated from the native semantic explication mechanisms of ontology modelling languages. The behaviour handler with which it is associated, and specifically the set of modifications attributed thereto, provides a basis for a set of inference rules to determine semantic information about the non-conceptual data item, and to attribute them to the graph node representing the behaviour handler.

The behaviour handler using a non-conceptual data item to update the data graph may include reading one or more data values from the non-conceptual data item and writing the one or more data values to new or existing graph elements within the data graph, or using the one or more data values to compute values which are written to the data graph. The graph elements which are updated by the behaviour handler may be linked to the graph node representing the behaviour handler by graph edges. The non-conceptual data item is stored in association with the behaviour handler and hence the graph node representing the behaviour handler serves as a conduit for graph nodes to access the non-conceptual data item.

The modification identification module is configured to identify graph elements modified as a consequence of the execution of the procedure defined by a behaviour handler. Graph elements modified as a consequence of the execution of the procedure may comprise those graph elements accessed and updated by the procedure itself, and may also comprise graph elements modified by other behaviour handlers which were triggered by updates performed by the procedure. The behaviour handlers themselves (via the execution module) may maintain a register or log of updates which are attributed to the procedure, and/or a graph edit distance algorithm may be used to identify changes in a particular region of the data graph. The record may comprise, in addition to identifying modified graph elements, one or more of the following: an indication of the form of the modification, a time stamp at which the modification took place, an indication of the behaviour handler or other entity responsible for performing the modification.

The set of modifications attributed to a behaviour handler forms the basis of analysis performed by the inference module. The respective sets of modifications of any pair of behaviour handlers can be compared and pattern matching or other forms of analysis applied in order to identify relationships between the sets of modifications, which relationships are added to the data graph as edges between the graph nodes representing the respective behaviour handlers. The analysis may include applying a set of rules or other instructions to the sets in order to recognise or identify when certain logical relationships exist between the two sets (i.e. the members of a first set are always instances of a second set, or the members of a first set are always n levels above members of the second set in a hierarchical structure).

In a particular example, the relationships between behaviour handlers that the inference module is configured to infer comprise subsumption relationships.

Subsumption relationships are a key building block of a semantic knowledge network, and the ability to store non-conceptual data items in association with subsumption relationships with other entities in a conceptual data graph therefore integrates the non-conceptual data item into the conceptual data graph. Subsumption relationships include parent-child relationships and class-instance relationships. Whether a subsumption relationship exists between two sets of graph elements can be determined by applying rules to the graph nodes among the graph elements if particular rules hold.

Optionally, the inference module is configured to apply rules from a predetermined set of rules to the sets of modifications of each of a pair of behaviour handlers in order to identify which relationships from among the predetermined set of relationships exist between the sets of modifications.

For example, the rule applied by the inference module may be, each graph node (which can also be referred to as a vertex) in a first set of modifications is connected to a graph node in a second set of modifications by a graph edge indicating that the graph node from the first set subsumes the graph node from the second set (i.e. the connection is "is-a/instance-of" from the second to the first). If such a rule holds true for all or a predetermined proportion of the first set of modifications, then the inference module may identify that the first set subsumes the second set, and add a connection between the graph nodes representing the behaviour handlers to which the respective sets of modifications are attributed indicating the identified relationship.

Optionally, the modification identification module is configured to store the set of modifications attributed to each of the behaviour handlers and, each time the procedure defined by a behaviour handler from among the plurality of behaviour handlers is executed and the modified graph elements identified, the identified graph elements are recorded as members of the set of modifications attributed to the behaviour handler by replacing the stored set of modifications attributed to the behaviour handler by the union of the stored set and the identified graph elements.

The set of modifications resulting from a single execution of a procedure may not reveal the full scope of graph elements which have the potential to be modified by a behaviour handler. It may be that the graph elements modified by a procedure are not the same at each execution of the procedure, and depend on factors including the characterisation of the trigger event and properties of the particular occurrence of the trigger event leading to the procedure being executed, and on the state of the data graph at the time of execution. For example, if the procedure is configured to set all of a group of graph elements to a particular state, and at the time of a first execution, each member of the group is already in the particular state, then the set of modifications attributed to the procedure after the first execution of the procedure will not reflect the potential of the procedure to influence the graph. However, at the time of a second execution, it may be that one or more members of the group were not already in the particular state, and therefore one or more modifications will be attributed to the behaviour handler. As the number of executions increases, the set of modifications will grow to reflect the potential of the procedure to influence the graph. Optionally, the set of modifications may be restricted in its membership, for example to those graph elements modified by the procedure defined by the behaviour handler in the n most recent executions or in the past predetermined fixed length of time.

The manner in which the modifications are identified will depend on the particular implementation requirements and in particular on the database management system controlling read and write accesses to the stored data graph. Optionally: executing the procedure defined by a behaviour handler includes adding a record to a log stored in association with the behaviour handler each time a graph element is modified by the procedure; and the modification identification module is configured to identify graph elements modified as a consequence of the execution of the procedure by reading the log stored in association with the behaviour handler defining the procedure.

Advantageously, maintaining such a log provides a basis for graph modifications to be identified. Furthermore, the log may include information which could not necessarily be derived by merely observing the state of the graph. For example, the system log may timestamp modifications, and/or indicate the procedure being executed that caused the modification.

As an alternative to utilising a system log, or optionally in addition to utilising a system log, the modification identification module may be configured to identify graph elements modified as a consequence of the execution of the procedure by executing graph edit distance algorithm.

Graph edit distance algorithm determines the changes made to the graph to go from a first graph state to a second graph state. The modification identification module may be configured to store a snapshot of the graph or of a sub-graph before and after execution of the procedure, and to compare the two using a graph edit distance algorithm in order to determine the set of modifications attributed to the procedure. The modification identification module may be configured to perform pattern matching or to confine the snapshots to particular regions of the graph in order to determine whether or not modifications can be rightfully considered to be consequences of the procedure. Alternatively, it may be that the modification identification module is aware of the timing at which procedures are executed and is therefore configured to time the snapshots appropriately so that all modifications between two snapshots can be considered to be consequences of a particular procedure. Optionally, additional procedures triggered by consequences of a first procedure, and the modifications to the graph caused by execution of the additional procedures, may be considered to be consequences of the first procedure.

The data graph itself is a semantic network and represents a knowledge domain with graph nodes representing resources or entities in the domain and graph edges representing relationships between those resources or entities. The data graph is a formalism for knowledge representation, that is to say, the data graph represents a real world domain, and therefore is considered conceptual. Optionally, the data graph is a conceptual data graph. This is contrary to the nature of the non-conceptual data items which, whilst attributable to concepts in the data graph and therefore to some extent representing the knowledge domain, the data item itself is significant at the machine level, that is to say, it provides an object for use in an imperative programming language or one or more lines of processing code executable by a machine.

The data graph is a representation of encoded data. That is to say, the data graph is a manifestation of underlying data and provides a basis for visualising the data, querying the data, and making the data available to user applications. The underlying data and the manner in which they store the data graph will depend upon the specific implementation requirements. Examples include the conceptual data graph being encoded using an ontology modelling language.

The ontology modelling language may be customised for use in an embodiment, or embodiments may also operate with ontology modelling languages which have not been customised or modified from their standardised forms. For example, the resource description framework (RDF) or resource description framework schema (RDFS) could be used, or the ontology modelling language OWL. The encoding determines the form of data items stored by the data storage system as part of the data graph.

Turning now to the non-conceptual data items, they may be in the form of objects ready for utilisation by an imperative programming language such as Java, and may be encoded by a schema system. For example, it may be that the non-conceptual data items are encoded by a schema system. An exemplary schema system which could be employed for such a purpose is the XML schema system.

The non-conceptual data items are readable by the procedure defined by a behaviour handler, and the non-conceptual data item associated with a behaviour handler is utilised during execution of the procedure defined by the behaviour handler in order to modify graph elements. The execution of the procedure is triggered by an occurrence of a specified trigger event. The trigger event may be specified on a per behaviour handler basis. Each behaviour handler may be stored in association with a list of one or more trigger events, occurrences of which cause the procedure defined by the behaviour handler to be executed. The trigger event may be an event causing a change to the non-conceptual data item, or an event causing a change to one or more specified graph elements. Alternatively, the trigger event may be a system event.

Optionally, the specified trigger event is either a structural change to a specified sub-graph within the data graph or a modification to the non-conceptual data item.

Thus, the behaviour handler defines a procedure which responds to a specified trigger event. The effects of the procedure defined by the behaviour handler can therefore be considered to be the response to the trigger event, and since the procedure utilises the non-conceptual data item, there is a logical link between the trigger event and the non-conceptual data item. The trigger event may even be a modification to the non-conceptual data item.

Data graphs can be of a size which necessitates storage across more than one computing device, or storage server. Furthermore, sub-graphs may be duplicated for reasons of fault tolerance and to improve query handling. Thus, the computing apparatus may be a single computing device such as a server, or may be a plurality of interconnected computing devices such as servers. In particular:

The computing apparatus itself may be a plurality of servers connected via a communication network, each server being configured to store a sub-graph of the data graph. The sub-graphs so stored may or may not be overlapping, depending on the particular implementation requirements. The communication network may be wired or wireless, or a combination of the two. Each server may comprise a data storage unit on which the sub-graph is stored, in addition to components including a CPU, a network interface card, and memory. The servers may interface using a P2P paradigm or in some other manner. The servers may collaborate in order to realise the functionality of the data storage system ,the execution module, the modification identification module, and the inference module. Alternatively, there may a single computing device configured to provide the functionality of the execution module, the modification identification module, and the inference module. That single computing device may be a server having a control function. The servers may also be referred to as data storage servers, computing devices, computers, or nodes.

Distributed data storage systems having processing functionality at each server present the opportunity for parallelisation of some procedures, which avoids processing bottlenecks and improves fault tolerance. For example, the modification identification module may be realised by each of the servers operating in cooperation with one another. Optionally, the modification identification module comprises a component module on each server configured to identify graph elements stored on the respective server modified as a consequence of the procedure.

Advantageously, dividing the functionality of the modification identification module so that each server checks the sub-graph stored thereon for modifications as a consequence of the procedure being executed reduces the processing burden on any single server, thereby improving response time and reducing processing bottlenecks. Furthermore, it reduces network traffic associated with one server assessing the sub-graph stored on another server.

Embodiments of another aspect include a method for the automated integration of non-conceptual data items into a data graph, the data graph being composed of graph elements including graph nodes and graph edges, the method comprising: for each of a plurality of non-conceptual data items: representing, as a graph node of the data graph, a behaviour handler defining a procedure for using the non-conceptual data item to update the data graph in response to an occurrence of a specified trigger event, the graph node representing the behaviour handler being stored in association with the non-conceptual data item; executing the procedure defined by the behaviour handler in response to an occurrence of the specified trigger event; and identifying graph elements modified as a consequence of the execution of the procedure, and recording the identified graph elements as members of a set of modifications attributed to the behaviour handler defining the executed procedure. The method further comprises inferring relationships between behaviour handlers by, for each pair of behaviour handlers, analysing the respective sets of modifications in order to identify relationships between the sets of modifications, and adding the identified relationships to the data graph as edges between the graph nodes representing the respective behaviour handlers.

For example, such a method may be a computer-implemented method. The method may be implemented using a single computer or server, or a plurality of interconnected computers or servers.

Embodiments of another aspect include a computer program which, when executed by a computing apparatus, causes the computing apparatus to function as a computing apparatus defined above as an invention embodiment.

Embodiments of another aspect include a computer program which, when executed by a computing apparatus, causes the computing apparatus to perform a method defined above or elsewhere in this document as an invention embodiment.

Furthermore, embodiments of the present invention include a computer program or suite of computer programs, which, when executed by a plurality of interconnected computing devices, cause the plurality of interconnected computing devices to perform a method embodying the present invention.

Embodiments of the present invention also include a computer program or suite of computer programs, which, when executed by a plurality of interconnected computing devices, cause the plurality of interconnected computing devices to function as a computing apparatus defined above or elsewhere in this document as an invention embodiment.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

Preferred features of the present invention will now be described, purely by way of example, with reference to the accompanying drawings, in which:-

Figure 1 illustrates a data graph including conceptual and non-conceptual data;

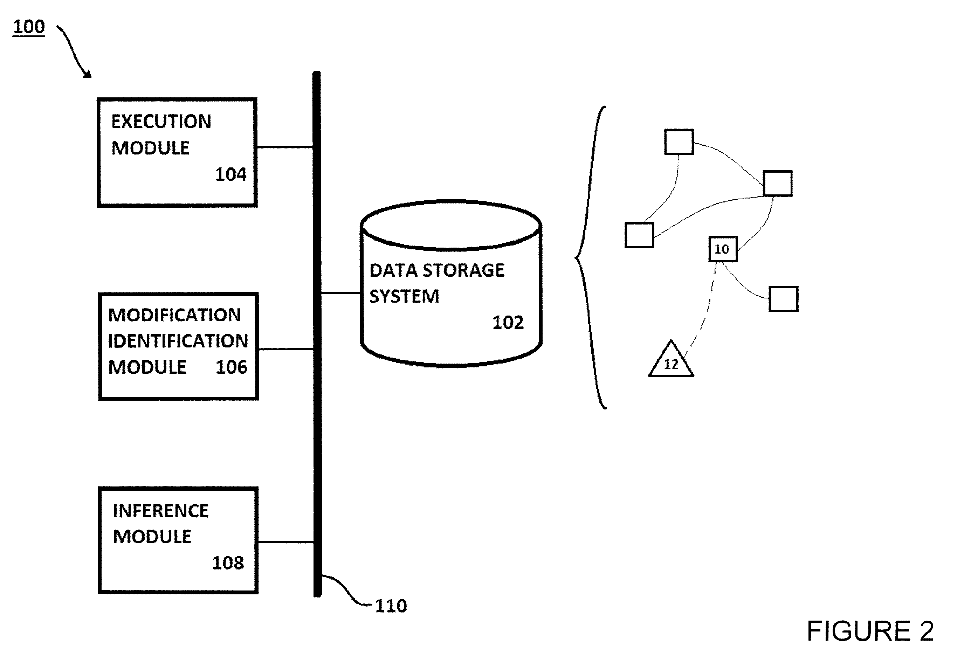

Figure 2 illustrates a computing apparatus embodying the present invention;

Figure 3 illustrates an exemplary data graph and associated non-conceptual data items stored in a data storage system according to embodiments;

Figure 4 is a flow chart representing the process of identifying modifications made to the graph as a consequence of a behaviour handler procedure being executed and inferring relationships between behaviour handlers; and

Figure 5 is a diagram representing exemplary computing apparatus architecture of an embodiment.

The computing apparatus 100 comprises a data storage system 102, an execution module 104, a modification identification module 106, and an inference module 108. A representation of data stored in the data storage system 102 is illustrated to the right hand side of the data storage system 102. The representation is illustrative of a region of a data graph and includes a behaviour handler 10 as a graph node connected to other graph nodes, wherein the squares represent graph nodes and the curved lines connecting the squares represent graph edges. The dashed line represents an association and connects a non-conceptual data item 12 to the behaviour handler 10 which utilises the non-conceptual data item 12 in order to update the data graph.

The computing apparatus 100 is configured to automate the integration of non-conceptual data items 12 into a data graph, the data graph being composed of graph elements including graph nodes and graph edges.

The data storage system 102, the execution module 104, the modification identification module 106, and the inference module 108 may be referred to collectively as functional modules, and may be realised by hardware configured specifically for carrying out the functionality of the module. The functional modules may also be realised by instructions or executable program code which, when executed by a computer processing unit, cause the computer processing unit to perform the functionality attributed to the functional module. The computer processing unit may operate in collaboration with one or more of memory, storage, I/O devices, network interfaces, sensors (either via an operating system or otherwise), and other components of a computing device, in order to realise the functionality attributed to the functional module. The modules may also be referred to as units, and may be steps or stages of a method, program, or process.

The functional modules are configured to exchange data with one another via a communications network 110. The communications network 110 may include one or more of the following: wired or wireless connections between computing devices; one functional module storing data in a memory or storage where it is accessible to other functional modules.

The computing apparatus 100 may be realised by a single computing device or server, or may be realised by more than one computing device or server operating collaboratively, for example, as one or more layers of a control protocol. Therefore, each functional module may be executed by components belonging to a plurality of computing devices, and the functional modules may be provided by more than one computing device.

The data storage system 102 is configured to store, as a graph node of the data graph for each of a plurality of non-conceptual data items 12, a behaviour handler 10 defining a procedure for using the non-conceptual data item 12 to update the data graph in response to an occurrence of a specified trigger event, the graph node representing the behaviour handler 10 being stored in association with the non-conceptual data item 12. The data storage system 102 may also comprise one or more data management units configured to unify data distributed across more than one individual data storage unit and present a graph-wide representation of data accessible to client applications. The one or more data management units may also be configured to handle queries and to provide an interface for accessing the stored data graph.

The execution module 104 is configured to execute the procedure defined by a behaviour handler 10 from among the behaviour handlers in response to an occurrence of the specified trigger event for the behaviour handler. The execution module 104 may be configured to maintain a register linking each behaviour handler 10 to specified events so that when there is an occurrence of an event linked to a behaviour handler 10 the execution module 104 is configured to execute the procedure defined by the behaviour handler 10. The execution module 104 may also be configured to maintain a queue or some other system for determining when resources are available for executing a procedure and instructing the execution accordingly. The execution module 104 may be configured to access hardware including one or more computer processing units and memory in order to execute procedures. The execution module 104 may be configured to execute the procedures in such a way that the changes/modifications/updates made to the graph as a consequence of executing the procedure are recorded, for example in a system log.

The modification identification module 106 is configured to identify graph elements modified as a consequence of the execution of the procedure, and to record the identified graph elements as members of a set of modifications attributed to the behaviour handler 10 defining the executed procedure. The set of modifications attributed to each behaviour handler 10 may be stored and updated each time the procedure defined by the behaviour handler is executed. The modification identification module 106 may be configured to read a system log on which graph updates are recorded and to link the graph updates to the execution of a particular procedure (for example, by pattern matching or by using information in the system log to determine which procedure was being executed whilst the updates occurred). The modification identification module 106 may be configured to compare the state of the data graph before and after execution of a procedure in order to determine the graph elements that were modified as a consequence of the procedure being executed. The modification identification module 106 may be configured to execute a graph edit distance algorithm in order to identify the graph elements updated as a consequence of the procedure being executed. The graph elements considered to be modified as a consequence of a procedure being executed may be restricted to those graph elements directly written to or updated by the procedure itself. Alternatively, it may be that one or more additional procedures triggered by graph updates performed by the procedure also modify graph elements, and that the graph elements so modified are also identified by the modification identification module 106 as being modified as a consequence of the procedure being executed.

The inference module 108 is configured to infer relationships between behaviour handlers 10 by, for each pair of behaviour handlers defining executed procedures, analysing the sets of modifications attributed to the pair of behaviour handlers in order to identify relationships between the sets of modifications, and adding the identified relationships to the data graph as edges between the graph nodes representing the respective behaviour handlers 10. For any or each pair of behaviour handlers from among the plurality of behaviour handlers, the inference module 108 is configured to compare the sets of modifications attributed to the respective behaviour handlers, and, based on patterns or relationships identified which apply to the membership of one set of modifications in relation to the membership of the other set of modifications, to determine how the two behaviour handlers are related.

The inference module 108 may be configured to apply each of a predetermined set of rules to the two sets of modifications being analysed, and if the two sets adhere to the rule, to determine that a relationship being tested by the rule exists between the two sets. Such a relationship is then added to the data graph as a connection between the graph nodes representing the behaviour handlers 10, and by association between the behaviour handlers 10 and the respective non-conceptual data item 12, semantic information (the relationship) is linked to the non-conceptual data items 12 and they become part of the semantic knowledge being represented by the data graph and hence integrated.

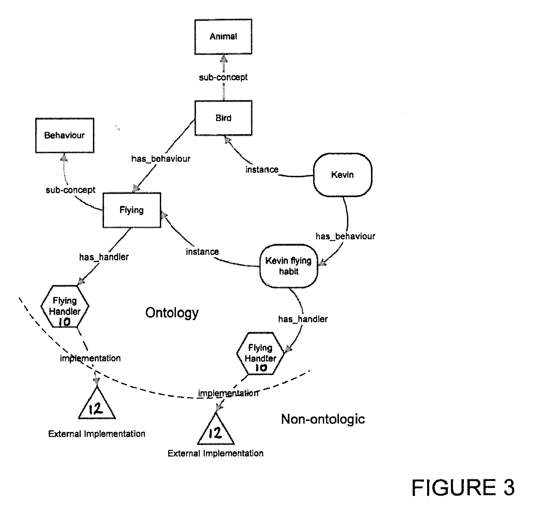

An exemplar snapshot of a data graph and associated non-conceptual data items stored by a data storage system 102 is illustrated in Figure 3. Non-conceptual data 12 are stored and managed by behaviour handlers 10 which encapsulate functionality with respect to the non-conceptual data.

Behaviour is manifested in the ontological knowledge model through conceptual surrogate specifying the main characteristics of behaviour by defining a procedure that is to be executed in response to an occurrence of a specified trigger event. The behaviour handlers 10 are considered as semantic constraints and connected to data items through channelled ontological properties. Figure 3 shows how the connection between behaviour handlers 10 and data items is established at both class (left-hand side) and instance (right-hand side) levels. In figure 3, the rectangles represent classes (or concepts), the rounded rectangles represent instances, the hexagons represent the behaviour handlers 10, and triangles are non-conceptual data items 12 which implement the behaviour handlers 10, for example by reciting machine-readable code, and reside outside the ontology. The form of the non-conceptual data items 12 implementing the behaviour handlers 10 may be, for example: code in a native programming language, processing instructions prompting user input, processing instructions configured to run in the absence of user input. Semantic information attributed to the behaviour handlers 10 manifests itself when the implementation data items 12 interact with and modify the data graph. When the semantics are not manifested, they are considered unknown based on the open world assumption. In figure 3, flying data behaviour is given at the concept level to all birds and at the instance level to "Kevin". Even though the same external implementation is used in the given example, behaviour handlers 10 can be realised differently based on specific application requirements.

The behaviour handlers 10 are event-driven. Events which trigger the behaviour handlers 10 are specified, for example, as properties of the data graph which apply to the behaviour handlers 10 collectively, or as properties defined on a per-behaviour handler basis. Events which trigger behaviour handlers can be both system events and data events. System events correspond to system level operations and are normally used to trigger behaviours that are applicable to a large number of resources. Data events are triggered by data operations, e.g. data insertion, data visits, data update and removal, etc.

In case of data event, it may be that the scope of event determines which behaviour handler is triggered. That is to say, different behaviour handlers specify different event scopes that they are responsive to. For example, if a data event is a consequence of a data modification at the class level, the behaviour handler 10 associated with class level data items in the data graph is triggered (if it specifies class-level events) and the procedure it defines is executed. On the other hand, if a data event is a consequence of a data modification at the instance level, the behaviour handler 10 associated with instance level data items in the data graph is triggered (if it specifies instance-level events) and the procedure it defines is executed. Alternatively or additionally, it may be that a behaviour handler 10 stored as a property of a class-level data item in the data graph specifies that the procedure it defines should be executed in response to both class-level and instance-level data events, with potential that instance level behaviour overrides the concept level behaviour.

Exemplary techniques used by the inference module 108 in order to infer relationships based on sets of modifications attributed to behaviour handlers 10 will now be discussed. It may be that semantic information is defined explicitly by the behaviour handler, and the inference module 10 is configured to extract the semantic information and apply it to the graph elements representing the behaviour handler 10. Alternatively or additionally, the inference module 108 is configured to identify semantic information which manifests itself through the change of state of the data graph caused by the sets of modifications attributed to respective behaviour handlers.

The following is exemplary of techniques which may be employed by the inference module 108:

1. Let $G_i$ be the graph before a specific behaviour handler 10 is triggered and the procedure it defines executed on the graph, and $G_{i+1}$ be the graph after the procedure is terminated and the graph converges to a stable state. $\Delta G = G_{i+1} - G_i$ is defined as the difference between the two graphs that explicates the set of graph modifications that are attributable to the triggered behaviour handler. That is to say, $\Delta G_b$ is the set of modifications attributed to the behaviour handler b, its membership being modified graph elements.

2. Behaviour handler $b_i$ is a first triggered behaviour handler and behaviour handler $b_j$ is a second triggered behaviour handler (first and second are for distinction only and do not impart any technical significance to either behaviour handler).

3. A rule applied by the inference module 108 may be that behaviour handler $b_i$ is subsumed by behaviour handler $b_j$, if and only if $\Delta G_{b_j} > \Delta G_{b_i}$

4. Another rule applied by the inference module 108 may be that behaviour handler $b_j$ is subsumed by behaviour handler $b_i$, if and only if $\Delta G_{b_i} > \Delta G_{b_j}$ Another rule applied by the inference module 108 may be that behaviour handler $b_i$ is equivalent to behaviour handler $b_j$, if and only if $\Delta G_{b_j} > \Delta G_{b_i}$ and $\Delta G_{b_i} > \Delta G_{b_j}$

Operator > is defined as:

1. If $\Delta G_i \subset \Delta G_j$, then $\Delta G_j > \Delta G_i$
2. $\Delta G_j > \Delta G_i$, if for every vertex $v \in \Delta G_i$ one of the

following rules holds:

a. $v$ is a sub-concept of an descendant of some vertex $v' \in \Delta G_j$, i.e. $v$ and $v'$ can be connected with "is-a" edges or "instance-of" edges,

b. $\exists w, (w\ x_0), (x_0\ x_i)...(x_n\ v) \in G_i$, and $\exists w', (w'\ x'_0), (x'_0\ x'_i)...(x'_m v') \in Gj \wedge w \subseteq w'$ and $x_i \subseteq x'_i$ for all the interim concepts/vertices, i.e. if the two vertices cannot be connected with "is-a/instance-of" edges, they are the range of some properties who are connected with "is-a/instance-of" edges either in the different graph or in the original graph.

3. If $\Delta G_j$ is an isograph of $\Delta G_i$, then $\Delta G_j > \Delta G_i$, and $\Delta G_i > \Delta G_j$

The semantic explication can be progressive by updating the set of modifications attributed to a behaviour handler 10 each time the behaviour handler 10 is triggered. Therefore the progressive manifestation is defined as the extent scope of the behaviour:

$$\varepsilon_k(b) = \varepsilon_{k-1}(b) \cup \Delta G_k^b$$

where $\Delta G_k^b = G_k(b) - G_k$. In other words, the $k$th version of the set of modification attributable to behaviour handler $b$, is the union of the ($k$-1)th manifestation and the difference between the resultant graph after $b$ is triggered and the original graph before $b$ is triggered for the $k$th time. $\varepsilon$ represents the manifestation process.

The behaviour handlers 10 may be configured so that graph updates resulting from their execution (or the execution of the procedures which they define) are localised to the graph nodes connected to the graph node representing the behaviour handler 10, or to remote (i.e. not connected to the graph node representing the behaviour handler by an edge) regions of the graph defined in the behaviour handler. Each behaviour handler 10 may be configured to maintain a list of changes made to the state of the graph, for instance in a system log file. When such log files are not available, a graph edit distance algorithm can be used to: identify what changes have been made to the graph; and isolate the graph elements that have been updated. The above-detailed inference rules can then be used to compare the sets of modifications attributed to pairs of behaviour handlers from among the plurality of behaviour handlers in order to determine how the behaviour handlers are related and which semantic information representing those relationships should be added to the data graph.

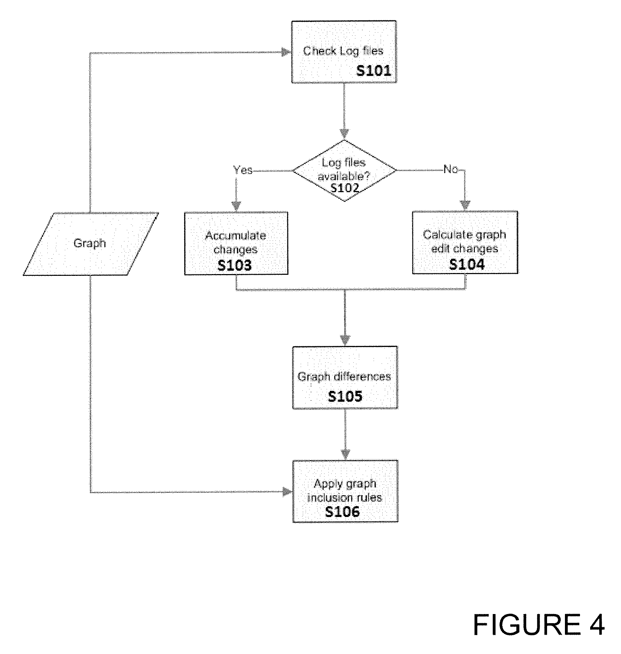

Figure 4 is a flow chart representing the process of identifying modifications made to the graph as a consequence of a behaviour handler procedure being executed and inferring relationships between behaviour handlers.

Steps S101 to S105 are exemplary of a process which may be performed by a modification identification module 106. Step S106 is exemplary of a process which may be performed by an inference module 108.

At Step S101 the system log files are checked. The system log files are a record of the updates made to the graph, and enable the updated graph elements to be identified. In addition, the system log files may include a timestamp attributed to each modification, and an identification of the behaviour handler being executed causing the modification to be made.

At step S102 it is determined whether log files are available. It may be that the data graph is implemented in a manner in which system log files are not maintained, or are unavailable for some other reason.

If it is determined that the log files are not available at step S102, then the flow proceeds to S104, and the modifications made to the graph are calculated. For example, a graph edit distance algorithm may be executed in order to identify updated graph elements. The calculation of graph modifications may be restricted to particular regions of the graph which the behaviour handler in question has the potential to influence. Such regions may be determined at design time and identified in the behaviour handler or may be determined based on the content of the behaviour handler. Snapshots of the state of the graph or regions thereof may be used as a basis for the calculations.

If it is determined that the log files are available at step S102, then the flow proceeds to step S103, and the modifications attributable to the execution of the procedure defined by the behaviour handler are accumulated. The changes may be identified based on the timestamps in comparison with the time of execution of the procedure, based on the modified graph elements and their proximity to the graph node representing the behaviour handler, and/or based on an explicit identification of the procedure giving rise to the modification. The system log file can be made available while the procedure defined by a behaviour handler is executed. The difference calculation can be distributed and delegated to the behaviour handler, which can be running on a different server in a distributed data system. This increases the parallelisation of the graph difference calculation.

At step S105, the set of modifications attributed to a behaviour handler are collated. This may be simply the result of steps S103 and/or S104, or may include a step of combining the most recent modifications attributable to the behaviour handler with the set of modifications already attributed to the behaviour handler. For example, each time the procedure defined by a behaviour handler is executed, any graph elements modified by the procedure that had not already been included in the set of modifications attributed to the behaviour handler are added to the set of modifications.

At step S106, the sets of modifications attributed to pairs of behaviour handlers are compared using, for example, the rules set out above. Relationships between sets of modifications are identified and added to the graph as properties of the graph nodes representing the behaviour handlers. The selection of pairs may be, for example, the most recently triggered behaviour handler with each other behaviour handler in the graph. Alternatively, the rules may be applied on an occasional basis, for example, when processing capacity allows, and a log maintained of each set of modifications that has been updated since it was last compared with the other sets of modifications. The sets of modifications identified in the log may then be compared with each other set of modifications.

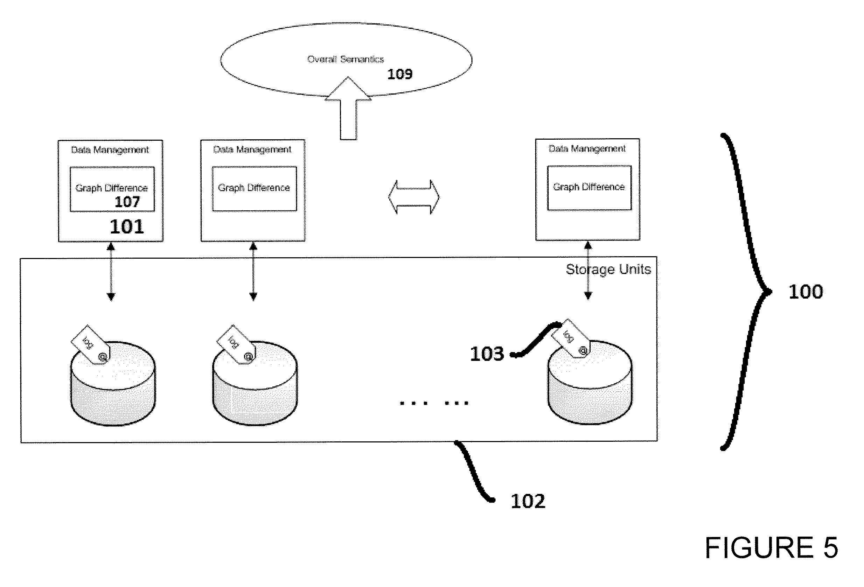

Figure 5 illustrates an exemplary architecture of a computing apparatus embodying the present invention. The data storage system 102 comprises a plurality of storage units. Each storage unit maintains a system log 103 and has a data management component 101 which is configured to identify modifications 107 made to the sub-graph stored on the storage unit as a consequence of a procedure defined by a behaviour handler 10 being executed. The data management components 101 are configured to cooperate to aggregate the individual modifications 107 in order to establish a set of modifications attributable to the behaviour handler 10 from which semantic information 109 can be determined by comparison with sets of modifications attributable to other behaviour handlers.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A computing apparatus configured to automate the integration of non-conceptual data items into a data graph, the data graph being composed of graph elements including graph nodes and graph edges, the computing apparatus comprising:

   a data storage system configured to store, as a graph node of the data graph for each of a plurality of non-conceptual data items, a behaviour handler defining a procedure for using the non-conceptual data item to update the data graph in response to an occurrence of a specified trigger event, the graph node representing the behaviour handler being stored in association with the non-conceptual data item;
   an execution module configured to execute the procedure defined by a behaviour handler from among the behaviour handlers in response to an occurrence of the specified trigger event for the behaviour handler;
   a modification identification module configured to identify graph elements modified as a consequence of the execution of the procedure, and to record the identified graph elements as members of a set of modifications attributed to the behaviour handler defining the executed procedure;
   an inference module configured to infer relationships between behaviour handlers by, for each pair of behaviour handlers defining executed procedures, analysing the sets of modifications attributed to the pair of behaviour handlers in order to identify relationships between the sets of modifications, and adding the identified relationships to the data graph as edges between the graph nodes representing the respective behaviour handlers.

2. A computing apparatus according to claim 1, wherein the relationships between behaviour handlers that the inference module is configured to infer comprise subsumption relationships.

3. A computing apparatus according to claim 2, wherein the inference module is configured to apply rules from a predetermined set of rules to the sets of modifications of each of a pair of behaviour handlers in order to identify which relationships from among the predetermined set of relationships exist between the sets of modifications.

4. A computing apparatus according to any of claims 1 to 3, wherein the modification identification module is configured to store the set of modifications attributed to each of the behaviour handlers and, each time the procedure defined by a behaviour handler from among the plurality of behaviour handlers is executed and the modified graph elements identified, the identified graph elements are recorded as members of the set of modifications attributed to the behaviour handler by replacing the stored set of modifications attributed to the behaviour handler by the union of the stored set and the identified graph elements.

5. A computing apparatus according to any of claims 1 to 4, wherein executing the procedure defined by a behaviour handler includes adding a record to a log stored in association with the behaviour handler each time a graph element is modified by the procedure; and

the modification identification module is configured to identify graph elements modified as a consequence of the execution of the procedure by reading the log stored in association with the behaviour handler defining the procedure.

6. A computing apparatus according to any of claims 1 to 5, wherein the modification identification module is configured to identify graph elements modified as a consequence of the execution of the procedure by executing graph edit distance algorithm.

7. A computing apparatus according to any of claims 1 to 6, wherein the data graph is a conceptual data graph.

8. A computing apparatus according to claim 7, wherein the conceptual data graph is encoded using an ontology modelling language.

9. A computing apparatus according to any of claims 1 to 8, wherein the non-conceptual data items are encoded by a schema system.

10. A computing apparatus according to any of claims 1 to 9, wherein the specified trigger event is either a structural change to a specified sub-graph within the data graph or a modification to the non-conceptual data item.

11. A computing apparatus according to any of claims 1 to 10, wherein the computing apparatus is a plurality of servers connected via a communication network, each server being configured to store a sub-graph of the data graph.

12. A computing apparatus according to claim 11, wherein, the modification identification module comprises a component module on each server configured to identify graph elements stored on the respective server modified as a consequence of the procedure.

13. A method for the automated integration of non-conceptual data items into a data graph, the data graph being composed of graph elements including graph nodes and graph edges, the method comprising:

for each of a plurality of non-conceptual data items:

representing, as a graph node of the data graph, a behaviour handler defining a procedure for using the non-conceptual data item to update the data graph in response to an occurrence of a specified trigger event, the graph node representing the behaviour handler being stored in association with the non-conceptual data item;

executing the procedure defined by the behaviour handler in response to an occurrence of the specified trigger event; and

identifying graph elements modified as a consequence of the execution of the procedure, and recording the identified graph elements as members of a set of modifications attributed to the behaviour handler defining the executed procedure;

the method further comprising:

inferring relationships between behaviour handlers by, for each pair of behaviour handlers, analysing the respective sets of modifications in order to identify relationships between the sets of modifications, and adding the identified relationships to the data graph as edges between the graph nodes representing the respective behaviour handlers.

14. A computer program which, when executed by a computing apparatus, causes the computing apparatus to function as the computing apparatus according to any of claims 1 to 10 or to perform the method of claim 13.

15. A suite of computer programs which, when executed by a plurality of computing devices, cause the plurality of computing devices to function as the computing apparatus according to claim 11 or 12.

FIGURE 1

FIGURE 2

FIGURE 3

Check Log files
**S101**

Log files available?
**S102**

Yes

No

Graph

Accumulate changes
**S103**

Calculate graph edit changes
**S104**

Graph differences
**S105**

Apply graph inclusion rules
**S106**

FIGURE 4

FIGURE 5

EP 2 963 563 A1

Europäisches
Patentamt

European
Patent Office

Office européen
des brevets

# EUROPEAN SEARCH REPORT

Application Number

EP 14 17 5097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/010323 A1 (WANG KUANSAN [US] ET AL) 13 January 2011 (2011-01-13) * paragraphs [0018] - [0034]; figures 1-2 * | 1-15 | INV. G06F17/30 |
| A | MARIANNE SHAW ET AL: "A Dataflow Graph Transformation Language and Query Rewriting System for RDF Ontologies", 25 June 2012 (2012-06-25), SCIENTIFIC AND STATISTICAL DATABASE MANAGEMENT, SPRINGER BERLIN HEIDELBERG, BERLIN, HEIDELBERG, PAGE(S) 544 - 561, XP047007220, ISBN: 978-3-642-31234-2 * Section 3 * | 1-15 | |
| A | LEE JUN H ET AL: "Goal-Oriented Requirements Analysis Using Goal Accumulation RDF Graph", 2014 INTERNATIONAL CONFERENCE ON INFORMATION SCIENCE & APPLICATIONS (ICISA), IEEE, 6 May 2014 (2014-05-06), pages 1-3, XP032614690, DOI: 10.1109/ICISA.2014.6847407 ISBN: 978-1-4799-4443-9 [retrieved on 2014-07-01] * the whole document * | 1-15 | TECHNICAL FIELDS SEARCHED (IPC) G06F |

The present search report has been drawn up for all claims

| Place of search | Date of completion of the search | Examiner |
|---|---|---|
| Berlin | 29 September 2014 | Moon, Timothy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 17 5097

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2014

| Patent document cited in search report | Publication date | Patent family member(s) | Publication date |
|---|---|---|---|
| US 2011010323    A1 | 13-01-2011 | NONE | |

For more details about this annex : see Official Journal of the European Patent Office, No. 12/82